# FASCICULE DE BREVET EUROPEEN

(11) **EP 3 232 313 B1**
(45) Date de publication et mention de la délivrance du brevet: **11.03.2020**
(21) Numéro de dépôt: 17165845.3
(22) Date de dépôt: 10.04.2017
(51) Int. Cl.: G06F 3/0485, H04N 5/445, H04N 21/431, H04N 21/482, G06F 3/0482

(54) **PROCÉDÉ DE NAVIGATION DANS UNE INTERFACE GRAPHIQUE DE GUIDE DES PROGRAMMES**
VERFAHREN ZUR NAVIGATION IN EINER GRAPHISCHEN SCHNITTSTELLE EINES PROGRAMMFÜHRERS
METHOD FOR NAVIGATING IN A GRAPHICAL USER INTERFACE OF A PROGRAM GUIDE

(30) Priorité: 15.04.2016 FR 1653353
(43) Date de publication de la demande: 18.10.2017
(73) Titulaire: WIZTIVI, 44470 Carquefou (FR)
(72) Inventeur: MUR, Guillaume, 44000 Nantes (FR)
(74) Mandataire: Loyer & Abello

(56) Documents cités:
- EP-A1- 2 262 231
- EP-A1- 2 343 883
- WO-A1-2009/055273
- US-A1- 2015 382 053

## Description

### Domaine technique

L'invention se rapporte au domaine de la navigation dans une interface graphique et, plus particulièrement au domaine de la navigation dans une interface graphique représentant un guide des programmes.

### Arrière-plan technologique

Il existe aujourd'hui de nombreux supports de diffusion de contenus média ainsi qu'une pluralité de chaînes de diffusion de ces contenus média. Ainsi, de nombreuses chaînes de télévision ou encore de stations de radio diffusent une grande variété de programmes. Afin de permettre aux utilisateurs de connaître à l'avance les programmes qu'ils pourront suivre, chaque chaîne de diffusion fournit une liste des programmes qu'elle prévoit de diffuser au cours d'une journée. Les utilisateurs peuvent ainsi consulter les programmes de chaque acteur de diffusion afin de décider le contenu média qu'ils souhaitent regarder et/ou écouter durant leur temps libre.

Afin de consulter simultanément les programmes d'une pluralité de chaîne de diffusion, il existe des guides de programmes sous forme de tableaux dont un premier axe représente une échelle de temps et un second axe représente les différentes chaînes de diffusion. Un tel tableau représente par exemple les programmes diffusés par une pluralité de chaînes de télévision durant une portion de l'après-midi ou encore durant la soirée. Ainsi, le guide des programmes affiche des informations sur les programmes qui seront diffusés à une heure donnée sur une chaîne de diffusion donnée. Chaque programme occupe le long de l'axe représentatif de l'échelle de temps un espace proportionnel à sa durée. Ainsi, un programme durant trois heures occupe un espace important le long de l'axe représentatif de l'échelle de temps et, inversement, un programme ne durant qu'un quart d'heure n'occupe que très peu d'espace le long de l'axe représentatif de l'échelle de temps.

Afin de renseigner l'utilisateur sur un programme particulier, l'interface graphique comporte en outre un moyen graphique permettant d'identifier visuellement un programme en cours de consultation par l'utilisateur. Ce moyen graphique peut prendre de nombreuses formes comme par exemple la surbrillance du programme et/ou l'affichage d'informations complémentaires sur le programme en cours de consultation. Lorsque l'utilisateur navigue dans le guide des programmes, le moyen graphique d'identification du programme consulté est déplacé pour être associé aux différents programmes consultés en fonction des instructions de navigation données par l'utilisateur.

Cependant, les durées des programmes diffusés sur les différentes chaînes étant très disparates, il arrive qu'un programme associé à une chaîne de diffusion présente une longueur le long de l'axe temporel équivalente à la longueur selon ce même axe temporel d'une pluralité de programmes diffusés sur une autre chaîne. Dès lors, lorsque l'utilisateur souhaite consulter les programmes sur cette autre chaîne, il est fréquent qu'il soit nécessaire de déplacer le moyen graphique d'identification du programme consulté sur cette autre chaîne puis de parcourir l'axe du temps le long des programmes de cette autre chaîne pour arriver à un programme cible dont l'heure de diffusion est pertinente.

Le document EP2343883 A1 décrit un traitement de données pour un affichage, sur commande reçue d'un utilisateur, de vignettes contenant des informations relatives à des contenus multimédias, par exemple des programmes de télévision, ayant des durées respectives et disponibles via une pluralité de sources respectives et à des instants respectifs. Les vignettes sont réparties sur un écran par instant de disponibilité selon un premier axe, et par source selon un deuxième axe distinct du premier axe. En particulier, les vignettes sont de dimensions apparentes égales et indépendantes de la durée des contenus.

### Résumé

Une idée à la base de l'invention est de fournir un guide des programmes permettant une bonne ergonomie de navigation et un haut degré de pertinence des programmes ciblés lors d'un changement de la chaîne de diffusion consultée.

Selon un mode de réalisation, l'invention fournit un procédé de navigation dans une interface graphique représentant un guide des programmes, l'interface graphique comportant :
- une pluralité de séries de cartes de programmes, chaque série de cartes de programmes étant associée à une chaîne de diffusion respective, chaque carte de programme représentant un programme à diffuser par ladite chaîne de diffusion associée, chaque carte de programme étant associée à une pluralité d'attributs de programme incluant un instant de début de programme et un instant de fin de programme, les cartes de programme d'une série de cartes de programmes étant positionnées par ordre chronologique le long d'un premier axe de l'interface graphique, la pluralité de séries de cartes de programmes étant positionné le long d'un deuxième axe de l'interface graphique, chaque carte de programme ayant une dimension le long du premier axe de l'interface graphique proportionnelle à une durée de programme attribuée à ladite carte de programme,
- un pointeur de carte active déplaçable dans l'interface graphique en réponse à des commandes de navigation, le pointeur se déplaçant par sauts entre cartes de programme, le pointeur se déplaçant le long du premier axe dans une série de cartes de programme en réponse à une commande de navigation le long du premier axe, le pointeur se déplaçant d'une série de cartes de programme à l'autre en réponse à une commande de navigation le long du deuxième axe, la carte de programme de l'interface graphique sur laquelle le pointeur est positionné constituant la carte active de l'interface graphique,
dans lequel le procédé de navigation dans l'interface graphique comporte :
- sélectionner une portion affichable de l'interface graphique, ladite portion affichable comportant une partie des séries de cartes de programmes de la pluralité de série de cartes de programmes et, pour chaque série de carte de programme de la partie de séries de cartes de programme, les cartes de programmes desdites séries de cartes de programmes destinées à être diffusées entre un instant de début d'affichage et un instant de fin d'affichage, la portion affichable de l'interface graphique comportant en outre la carte active, et afficher la portion affichable sur un dispositif d'affichage,
- déterminer un instant présent,
- déterminer un état de diffusion du programme associé à la carte active parmi les états « diffusion en cours » et « pas de diffusion en cours » selon que l'instant présent se trouve ou non entre l'instant de début de programme et l'instant de fin de programme attribués à la carte active,
- fixer un paramètre d'instant de diffusion cible égal à l'instant présent en réponse à la détection que l'état de diffusion du programme associé à la carte active est « diffusion en cours », et égal à l'instant de début de programme attribué à la carte active en réponse à la détection que l'état de diffusion du programme associé à la carte active est « pas de diffusion en cours »,
- recevoir une commande de navigation présentant une direction de navigation le long du deuxième axe de l'interface graphique,
- déplacer le pointeur pour sélectionner en tant que carte active une carte de programme positionnée dans la série de cartes de programmes correspondant à la direction de navigation et destinée à être diffusée à l'instant de diffusion cible.
- Selon d'autres modes de réalisation avantageux, un tel peut présenter une ou plusieurs des caractéristiques suivantes :
   Ainsi, un tel procédé de navigation dans un guide des programmes permet à un utilisateur de consulter les cartes de programmes associées à des chaînes de diffusions distinctes en associant le pointeur à une carte de programme pertinente lors d'un déplacement d'une chaîne de diffusion à une autre chaîne de diffusion. En particulier, la carte de programme associée au pointeur lors d'un changement de chaîne de diffusion est choisie en fonction de l'heure de consultation, de l'état de diffusion et de l'heure de début de diffusion du programme consulté, indépendamment de la durée du programme en cours de consultation. Ce procédé de navigation permet ainsi d'éviter à l'utilisateur de réitérer un grand nombre d'opérations de navigation le long de l'axe temporel du guide des programmes lorsqu'il souhaite consulter différentes chaînes de diffusion.

L'état de diffusion d'un programme peut être déterminé de nombreuses manières. Dans un mode de réalisation préférentiel, l'état de diffusion d'une carte est défini comme « diffusion en cours » lorsque l'instant présent est postérieur à l'instant de début de programme et antérieur à l'instant de fin de programme attribués à ladite carte. Dans un autre mode de réalisation, l'état de diffusion est défini comme « diffusion en cours » lorsque l'instant présent est postérieur à l'instant de début de programme attribué à ladite carte et que l'écart entre l'instant de début de programme attribué à ladite carte et l'instant présent est inférieur à la durée du programme associée à ladite carte. Inversement, l'état de diffusion de ladite carte est défini comme « pas de diffusion en cours » lorsque l'instant présent est antérieur à l'instant de début de programme ou postérieur à l'instant de fin de programme attribués à ladite carte. De même, la durée d'un programme attribué à une carte de programme peut être déterminée de nombreuses manières. Dans un mode de réalisation, la durée d'un programme est implémentée sous la forme d'un attribut de la carte de programme. Dans un autre mode de réalisation, la durée d'un programme attribué à une carte de programme est déterminée en calculant la différence entre l'instant de début de programme et l'instant de fin de programme attribués à ladite carte de programme.

Selon d'autres modes de réalisation avantageux, un tel peut présenter une ou plusieurs des caractéristiques suivantes.

Selon un mode de réalisation, le pointeur se déplace par sauts entre cartes adjacentes. Dans un autre mode de réalisation, le pointeur se déplace par sauts entre cartes non adjacentes, par exemple par sauts d'une pluralité de cartes prédéfinie.

Selon un mode de réalisation, l'étape de fixer le paramètre d'instant de diffusion cible est exécuté en réponse à la réception d'une commande de navigation le long du premier axe de l'interface graphique. A contrario, le paramètre d'instant de diffusion cible n'est pas modifié en réponse à la réception d'une commande de navigation le long du deuxième axe de l'interface graphique. Ainsi, on évite un déplacement erratique du pointeur le long de l'axe temporel lors d'une navigation entre les chaînes de diffusion.

Selon un mode de réalisation, l'étape de fixer le paramètre d'instant de diffusion cible est exécutée à l'expiration d'un compteur de temps, le procédé comportant en outre
- réinitialiser le compteur de temps à une durée positive déterminée à chaque réception de commande de navigation le long du premier axe de l'interface graphique. Un tel compteur de temps permet à l'utilisateur de naviguer le long de l'axe temporel de l'interface graphique tout en conservant une heure de diffusion cible évitant ainsi de redéfinir l'heure de diffusion cible entre chaque déplacement le long de l'axe temporel de l'interface graphique.

Selon un mode de réalisation, l'étape d'afficher la portion affichable de l'interface graphique comporte en outre, pour chaque carte de programme de la portion affichable de l'interface graphique en cours de diffusion à l'instant présent, afficher un marquage positionné sur ladite carte de programme en cours de diffusion à l'instant présent. Un tel marquage permet à l'utilisateur de connaître plus facilement les programmes en cours de diffusion sur le guide des programmes.

Selon un mode de réalisation, la pluralité de séries de cartes de programmes est positionnée le long du deuxième axe de l'interface graphique de manière cyclique. Ainsi, l'utilisateur n'est pas obligé de parcourir l'ensemble des chaînes de diffusion lorsqu'il souhaite passer de la consultation de la première chaîne de diffusion de la pluralité de chaînes de diffusion à la consultation de la dernière chaine de diffusion de la pluralité de chaînes de diffusion, et inversement.

Selon un mode de réalisation, le procédé de navigation comporte en outre :
- recevoir une commande de plage de diffusion, un instant de début d'affichage prédéterminé et un instant de fin d'affichage prédéterminé étant associés à la commande de plage de diffusion,
- modifier la portion affichable de l'interface graphique pour sélectionner, pour chaque série de carte de programme de la portion affichable de l'interface graphique, les cartes de programme desdites séries de cartes de programme comprises entre l'instant de début d'affichage prédéterminé et l'instant de fin d'affichage prédéterminé,
- modifier l'instant de diffusion cible pour définir en tant qu'instant de diffusion cible un instant de diffusion prédéterminé dans ladite plage de diffusion,
- disposer le pointeur pour sélectionner en tant que carte active la carte de programme destinée à être diffusée à l'instant de diffusion cible.

Ainsi, l'utilisateur peut consulter de manière simple et rapide un programme dont la diffusion est prévue dans le futur à un instant prédéterminé comme par exemple en première partie de soirée, en seconde partie de soirée ou encore le lendemain à la même heure.

Selon un mode de réalisation, le procédé de navigation comporte en outre :
- recevoir une commande de navigation présentant une direction de navigation le long du premier axe de l'interface graphique correspondant un instant postérieur,
- comparer un instant de fin de diffusion attribué à la carte active et l'instant de fin d'affichage de la portion affichable de l'interface graphique,
- modifier la portion affichable de l'interface graphique pour sélectionner, pour chaque série de carte de programme de la portion affichable de l'interface graphique, les cartes de programme desdites séries de cartes de programme comprises entre l'instant de fin d'affichage de la portion affichable de l'interface graphique et l'instant de fin d'affichage de la portion affichable de l'interface graphique incrémenté d'une durée prédéterminée en réponse à la détection d'un instant de fin de diffusion attribué à la carte active postérieur ou identique à l'instant de fin d'affichage de l'interface graphique.

Selon un mode de réalisation, le procédé de navigation comporte en outre :
- disposer le pointeur pour sélectionner en tant que carte active la carte de programme positionnée dans la position suivant la position de la carte active le long du premier axe de l'interface graphique en réponse à la détection d'un instant de fin de diffusion attribué à la carte active égal à l'instant de fin d'affichage.

Selon un mode de réalisation, le procédé de navigation comporte en outre :
- recevoir une commande de navigation présentant une direction de navigation le long du premier axe de l'interface graphique correspondant à un instant antérieur,
- comparer l'instant de début d'affichage de la portion affichable de l'interface graphique et l'instant de début de diffusion attribué à la carte active,
- modifier la portion affichable de l'interface graphique pour sélectionner pour chaque série de carte de programme de la portion affichable de l'interface graphique, les cartes de programme desdites séries de cartes de programme comprises entre l'instant de début d'affichage de la portion affichable de l'interface graphique et l'instant de début d'affichage de la portion affichable de l'interface graphique décrémenté d'une durée prédéterminée en réponse à la détection d'un instant de début de diffusion attribué à la carte active antérieur ou identique à l'instant de début d'affichage de l'interface graphique.

Selon un mode de réalisation, le procédé de navigation comporte en outre :
- disposer le pointeur pour sélectionner en tant que carte active la carte de programme positionnée dans la position précédant la position de la carte active en réponse à la détection d'un instant de début de diffusion attribué à la carte active identique à l'instant de début d'affichage de l'interface graphique.

Ainsi, l'utilisateur peut modifier la portion affichée du guide des programmes tout en conservant la sélection de la carte consultée lorsque celle-ci présente une durée s'étendant sur deux plages horaires successives.

Selon un mode de réalisation, l'invention fournit également un dispositif de génération d'une interface graphique comportant un module de commande configuré pour
- générer une interface graphique comportant une pluralité de séries de cartes de programmes, chaque série de cartes de programmes étant associée à une chaîne de diffusion respective, chaque carte de programme représentant un programme à diffuser par ladite chaîne de diffusion associée, chaque carte de programme étant associée à une pluralité d'attributs de programme incluant un instant de début de programme et une durée de programme, les cartes de programme d'une série étant positionnées par ordre chronologique le long d'un premier axe de l'interface graphique, la pluralité de séries étant positionné le long d'un deuxième axe de l'interface graphique, chaque carte de programme ayant une dimension le long du premier axe proportionnelle la durée de programme attribué à ladite carte de programme,
- sélectionner une portion affichable de l'interface graphique, ladite portion affichable comportant une partie des séries de cartes de programmes de la pluralité de série de cartes de programmes et, pour chaque série de carte de programme de la partie de séries de cartes de programme, les cartes de programmes desdites séries de cartes de programmes destinées à être diffusées entre un instant de début d'affichage et un instant de fin d'affichage, la portion affichable de l'interface graphique comportant en outre la carte active, et afficher la portion affichable sur un dispositif d'affichage,
- générer un pointeur de carte active déplaçable dans l'interface graphique en réponse à des commandes de navigation, le pointeur se déplaçant par sauts entre cartes de programme adjacentes, le pointeur se déplaçant le long du premier axe dans une série de cartes de programme en réponse à une commande de navigation le long du premier axe, le pointeur se déplaçant d'une série de cartes de programme à l'autre en réponse à une commande de navigation le long du deuxième axe, la carte de programme de l'interface graphique sur laquelle le pointeur est positionné constituant la carte active de l'interface graphique,
- sélectionner une carte de programme en tant que carte active,
- déterminer un instant présent,
- déterminer un instant de diffusion du programme associé à la carte active parmi les états « diffusion en cours » et « pas de diffusion en cours » selon que l'instant présent se trouve ou non entre l'instant de début de programme et l'instant de fin de programme attribués à la carte active,
- fixer un paramètre d'instant de diffusion cible égal à l'instant présent en réponse à la détection que l'état de diffusion de la carte active est « diffusion en cours », et égal à l'instant de début de programme attribué à la carte active en réponse à la détection que l'état de diffusion de la carte active est « pas de diffusion en cours »,
- recevoir une commande de navigation présentant une direction de navigation le long du deuxième axe de l'interface graphique,
- déplacer le pointeur pour sélectionner en tant que carte active une carte de programme positionnée dans la série de cartes de programmes correspondant à la direction de navigation et destinée à être diffusée à l'instant de diffusion cible.

Certains aspects de l'invention partent de l'idée de fournir un procédé de navigation dans un guide des programmes permettant de consulter des cartes de programmes pertinentes lors d'un changement de chaîne consulté. Certains aspects de l'invention partent de l'idée de permettre un déplacement dans une interface graphique de guide des programmes ne nécessitant pas un grand nombre de commandes pour consulter une carte de programme.

### Brève description des figures

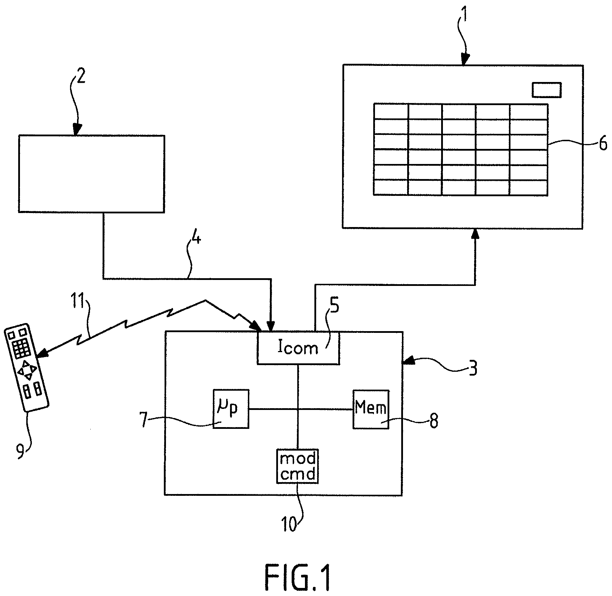

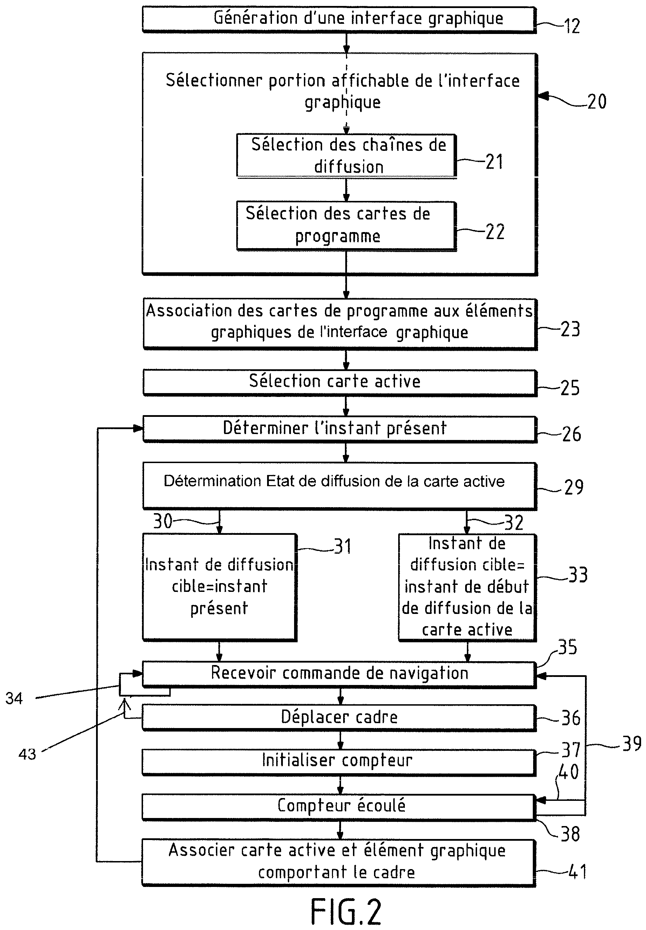

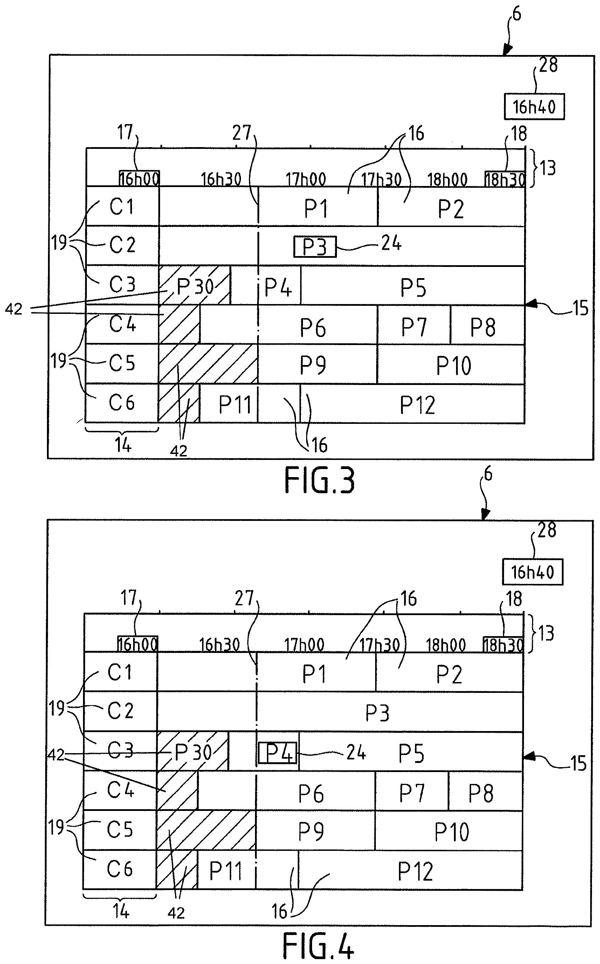

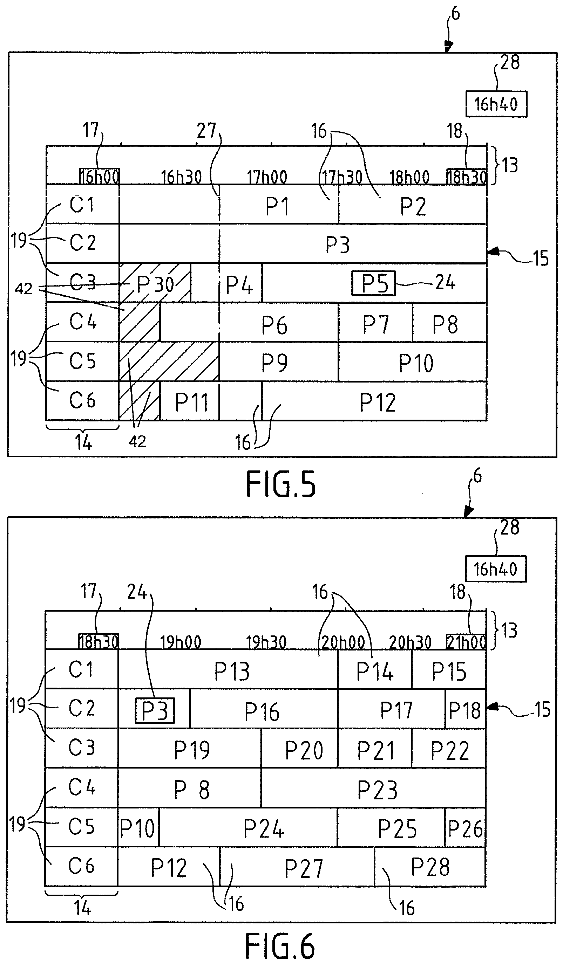

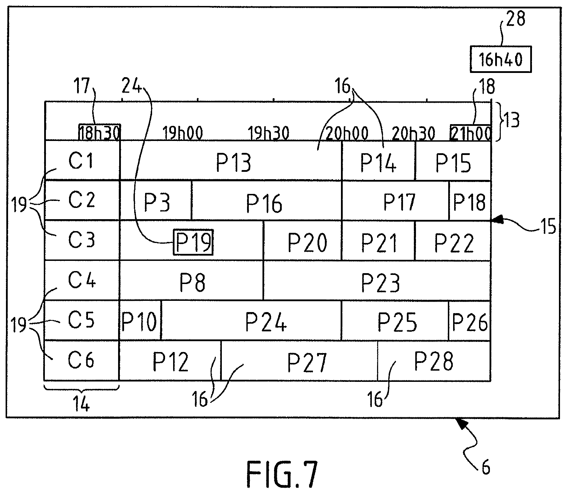

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- **La** **figure 1** représente schématiquement un système d'affichage de guide des programmes ;
- **La** **figure 2** représente un organigramme de fonctionnement d'un procédé de navigation dans une interface graphique représentative d'un guide des programmes ;
- **La** **figure 3** représente un affichage du guide des programmes comportant un curseur illustrant un programme cible associé à un programme en cours de diffusion ;
- **La** **figure 4** représente l'affichage du guide des programmes de la figure 3 dans lequel le curseur désignant le programme cible a été déplacé pour cibler un programme diffusé sur une autre chaîne de diffusion ;
- **La** **figure 5** représente l'affichage du guide des programmes de la figure 4 dans lequel le curseur désignant le programme cible a été déplacé pour cibler un programme diffusé ultérieurement sur la même chaîne de diffusion ;
- **La** **figure 6** représente l'affichage du guide des programmes de la figure 3 dans lequel le curseur désignant le programme cible a été déplacé pour cibler un programme diffusé ultérieurement sur la même chaîne de diffusion ;
- **La** **figure 7** représente l'affichage du guide des programmes de la figure 5 dans lequel le curseur désignant le programme cible a été déplacé pour cibler un programme diffusé ultérieurement sur la même chaîne de diffusion ;

### Description détaillée de modes de réalisation

La description ci-après est réalisée à titre illustratif dans le cadre d'un guide des programmes pour télévision. Cependant, l'interface graphique décrite ci-dessous peut être appliquée à de nombreux domaines comme par exemple dans le cadre d'un guide des programmes de diffusion de station de radio, de programmes multimédia sur l'Internet ou autre.

En référence à la figure 1, un téléviseur 1 est relié à un serveur distant 2 de distribution de télévision numérique par l'intermédiaire d'un boîtier d'accès 3 et d'un réseau d'accès 4. Le boîtier d'accès 3 est par exemple placé à proximité du téléviseur 1 voire mécaniquement intégré avec celui-ci. Le réseau d'accès 4 peut être un réseau radio, filaire à haut débit, par exemple un réseau de cuivre, câbles coaxiaux ou de fibres optiques.

Une fonction du boîtier d'accès 3 est de permettre la réception de signaux de télévision depuis le serveur distant 2. Une autre fonction du boîtier d'accès 3 est de fournir une interface graphique 6 d'affichage d'un guide des programmes. Une telle interface graphique 6 est générée par le boîtier d'accès 3 à partir d'informations de programmation de diffusions transmises depuis le serveur distant 2 via le réseau d'accès 4. Le boîtier d'accès 3 comporte un module de communication 5 connecté au réseau d'accès 4 pour recevoir les différentes informations depuis le serveur distant 2. Comme illustré sur la figure 1, le module de communication 5 est également connecté au téléviseur 1 afin de transmettre l'interface graphique 6 générée par le boîtier d'accès 3 ainsi que les contenus audio et vidéo correspondant aux programmes à diffuser. La connexion entre le boîtier d'accès 3 et le téléviseur 1 est réalisée de toute manière adaptée, par exemple à l'aide d'un câble HDMI, d'un câble péritel, d'une connexion sans fil, d'un câblage réseau ou autre.

Afin de traiter les signaux reçus depuis le serveur distant 2, le boîtier d'accès 3 comporte un microprocesseur 7 et une mémoire interne 8. Le boîtier d'accès 3 peut aussi comporter d'autres modules physiques ou fonctionnels (non illustrés) pour offrir des fonctionnalités plus riches. De tels modules sont par exemple des modules de lecture de dispositif de stockage externe (DVD, carte SD, disque dur, etc.), un module démultiplexeur, un module de décodage de signal, des connectiques supplémentaires ou encore des modules de génération d'interface graphique pour gérer le boîtier d'accès 3 et ses différentes fonctionnalités. En particulier, le boîtier d'accès 3 comporte un module de commande 10 configuré pour générer l'interface graphique 6 de guide des programmes et gérer la navigation dans l'interface graphique 6 de guide des programmes.

Le boîtier d'accès 3 est piloté par un utilisateur à l'aide de tout moyen adapté, par exemple au moyen d'une télécommande 9. Cette télécommande 9 est reliée au module de communication 5 du boîtier d'accès 3, par exemple via des signaux radio ou infrarouges 11. La télécommande 9 permet par exemple de contrôler et/ou d'activer les différentes fonctions du boîtier d'accès 3, à savoir la sélection de chaîne, la configuration de l'affichage, la navigation dans un programme enregistré etc. La télécommande 9 permet également de sélectionner des éléments graphiques de l'interface graphique 6 et de naviguer dans le guide des programmes comme cela sera décrit ci-après en regard des figures 2 à 7.

Les figures 2 à 7 illustrent le fonctionnement d'un procédé de navigation dans l'interface graphique 6. Plus particulièrement, la figure 2 représente un organigramme de fonctionnement du procédé de navigation dans l'interface graphique 6 représentative d'un guide des programmes et les figures 3 à 7 illustrent différents états de l'interface graphique 6 au cours de la navigation. Ce procédé est mis en œuvre par le module de commande 10.

L'accès à l'interface graphique 6 de guide des programmes se fait par tout moyen adapté, par exemple via une touche dédiée de la télécommande 9 ou encore par navigation, sélection et activation d'une icône dédiée dans une interface graphique de gestion du boîtier d'accès 3.

Lorsque le boîtier d'accès 3 reçoit une instruction d'affichage de l'interface graphique 6, il génère une interface graphique initiale (étape 12). L'interface graphique 6 comporte un axe temporel 13 représentatif d'une échelle de temps et un axe des chaînes 14 représentatif de chaînes de diffusion. L'interface graphique 6 comporte en outre un tableau de programmes 15 comportant une ligne de programmes pour chaque chaîne de diffusion le long de l'axe de chaînes 14. Le tableau 15 comporte en outre sur chaque ligne du tableau 15 une pluralité d'éléments graphiques 16 représentant les programmes diffusés au cours du temps sur la chaîne de diffusion associée à la ligne correspondante du tableau.

L'axe temporel 13 de l'interface graphique 6 comporte un horaire de début d'affichage 17 et un horaire de fin d'affichage 18, L'horaire de début d'affichage 17 et l'horaire de fin d'affichage 18 peuvent être définis de nombreuses manières, par exemple en étant initialisés à des horaires prédéterminés, à des horaires identiques à ceux de la dernière consultation, en définissant comme horaire de début d'affichage 17 l'instant présent ou autre. Afin de faciliter la lecture du tableau 15, des points de référence sont indiqués le long de l'axe temporel 13, par exemple sous la forme d'un point de référence toutes les trente minutes entre l'horaire de début d'affichage 17 et l'horaire de fin d'affichage 18. Sur les figures 3 à 5 par exemple, l'horaire de début d'affichage est 16h00 et l'horaire de fin d'affichage est 18h30, un point de référence étant indiqué le long de l'axe temporel 13 pour toutes les demi-heures entre 16h00 et 18h30.

L'axe des chaînes 14 présente, pour chaque chaine de diffusion correspondant à une ligne du tableau 15, une case 19 affichant un descriptif de la chaîne de diffusion correspondante, par exemple le nom de la chaîne et son logo.

Le serveur distant 2 fournit au boîtier d'accès 3 une série de chaîne de diffusion. Chaque chaîne de diffusion comporte une pluralité de cartes de programme. Chaque carte de programme correspond à un programme destiné à être diffusé. Chaque carte de programme comporte en outre des attributs comportant par exemple un identifiant du programme, son heure de début de diffusion et son heure de fin de diffusion. L'identifiant d'une carte de programme comporte par exemple un titre du programme, un genre associé au programme, une indication de critique du programme, une durée, etc.

Lorsque l'interface graphique initiale est générée (étape 12), une étape de sélection (étape 20) consiste à définir une portion affichable du tableau de programmes 15 devant être affichée dans l'interface graphique 6. En effet, afin d'afficher les informations sur les programmes diffusés de manière lisible sur le téléviseur 1, seule une partie des chaînes de diffusions de la série de chaîne de diffusions sont affichées en même temps. De même, seule une partie des programmes associés à chaque chaîne de diffusion sélectionnée sont affichés en même temps, à savoir les cartes de programmes entre l'horaire de début d'affichage 17 et l'horaire de fin d'affichage 18.

L'étape de sélection (étape 20) comporte dans un premier temps la sélection par le module de commande 10 d'une partie des chaînes de diffusion de la série de chaîne de diffusion (étape 21). Les chaines de diffusion peuvent être sélectionnées de nombreuses manières, par exemple en sélectionnant les premières chaînes de diffusion de la série de chaîne de diffusions, les dernières chaînes de diffusions consultées par l'utilisateur, les chaines de diffusions les plus consultées par l'utilisateur ou tout autre moyen adapté à la sélection des chaînes de diffusion. Chaque case 19 de l'interface graphique 6 est alors associée, par ordre d'apparition des chaînes de diffusion dans la série de chaîne de diffusion, à l'une parmi les chaînes de diffusion sélectionnées. Sur les figures 3 à 7, les cases 19 comportent des titres de chaînes numérotées de la chaîne C1 à la chaîne C6.

Dans un second temps, l'étape de sélection (étape 20) présente, pour chaque chaîne de diffusion sélectionnée, une sélection par le module de commande 10 des cartes de programmes diffusées entre l'horaire de début d'affichage 17 et l'horaire de fin d'affichage 18 (étape 22).

Les cartes de programmes sélectionnées par le module de commande 10 sont ensuite affichées sur l'interface graphique 6 (étape 23). Pour cela, chaque carte de programme sélectionnée est associée à un élément graphique 16 de l'interface graphique 6 situé sur la ligne du tableau 15 correspondant à la chaîne de diffusion à laquelle appartient ladite carte de programme. Chaque élément graphique 16 présente une longueur le long de l'axe temporel 13 proportionnelle à la durée du programme de la carte de programme associée. Pour chaque chaîne de diffusion sélectionnée, les éléments graphiques 16 sont positionnés le long de l'axe temporel 13 par ordre chronologique de diffusion. Les éléments graphiques 16 permettent l'affichage de différentes informations relatives aux programmes associés aux cartes de programmes comme par exemple le titre du programme, sa durée, son genre, etc. Sur les figures 3 à 7, les éléments graphiques 16 des programmes identifiés de P1 à P28.

L'interface graphique 6 comporte un élément d'identification du programme consulté. L'identification du programme consulté peut être réalisée de nombreuses manières, par exemple avec un pointeur graphique mobile superposé à l'image, en affichant l'élément graphique correspondant au programme consulté en surbrillance, à l'aide d'une bordure élargie de l'élément graphique associé au programme consulté, d'un fond distinct ou tout autre moyen adapté. Dans la suite de la description et sur les figures 3 à 7, le programme consulté est associée à un cadre 24 entourant le titre du programme dans l'élément graphique 16 correspondant au programme consulté.

Parmi les cartes de programme sélectionnées, une carte est initialisée comme carte active (étape 25). La carte active peut être initialisée de nombreuses manières, par exemple en sélectionnant comme carte active un programme en cours de diffusion sur la dernière chaîne de diffusion consulté. Lors de la première sélection de la carte active, le cadre 24 est associé à la carte active sélectionnée.

Dès lors que la carte active est sélectionnée, l'instant présent est déterminé (étape 26). L'instant présent peut être obtenu par tout moyen, depuis le serveur distant 2 ou encore via une horloge interne du boîtier d'accès 3. L'interface graphique 6 comporte une barre temporelle 27 permettant d'identifier l'instant présent. Cette barre temporelle 27 est perpendiculaire à l'axe temporel 13 et se déplace le long de l'axe temporel 13. Sur les figures 3 à 5, la barre temporelle 27 indique un instant présent de 16h40. L'instant présent est en outre indiqué dans un espace d'affichage dédié 28 de l'interface graphique 6.

L'instant présent est ensuite comparé aux attributs de la carte active (étape 29) afin de déterminer si la carte active correspond à un programme en cours de diffusion ou non. Lorsque l'instant présent est postérieur à l'instant de début de diffusion de la carte active et antérieur à l'instant de fin de diffusion de la carte active (étape 30), i.e. la carte active correspond à un programme en cours de diffusion, un paramètre d'état de diffusion de la carte active est initialisé à un statut « diffusion en cours » et un paramètre d'instant de diffusion cible est initialisé à l'instant présent (étape 31). Inversement, lorsque l'instant présent est antérieur à l'instant de début de diffusion ou postérieur à l'instant de fin de diffusion attribués à la carte active (étape 32), i.e. la carte active correspond à un programme respectivement futur ou passé, le paramètre d'état de diffusion de la carte active est initialisé à un statut « pas de diffusion en cours » et l'instant de diffusion cible est initialisé à l'instant de début de diffusion attribué à la carte active (étape 33). L'instant de diffusion cible est un paramètre fonctionnel stocké dans la mémoire et qui n'est pas visible par l'utilisateur, mais qui influence la réponse de l'interface graphique aux commandes de navigation produites par l'utilisateur.

Une fois l'instant de diffusion cible déterminé, le boîtier d'accès reste en attente d'une commande de navigation (étape 34). L'utilisateur peut naviguer dans le guide des programmes à l'aide de touches de la télécommande 9, par exemple en utilisant des touches illustrées à l'aide de flèches directionnelles de la télécommande 9, en tapant directement une heure de diffusion souhaitée ou encore un numéro de chaîne cible.

La navigation dans l'interface graphique 6 se fait simplement en modifiant l'élément graphique 16 associé au cadre 24 en fonction d'une commande de navigation générée par l'utilisateur, c'est-à-dire, par exemple, en déplaçant le cadre 24 parmi les cartes de programme. Lorsque le module de commande 10 reçoit une commande de navigation (étape 35), il modifie l'association de l'élément graphique 16 et du cadre 24 (étape 36) en fonction de la commande de navigation reçue.

Dans un mode de réalisation, ie boîtier de commande peut surveiiier ia durée d'association entre le cadre 24 et l'élément graphique 16 afin d'afficher des informations complémentaires attribuées à la carte de programme associée audit élément graphique 16. Par exemple, lorsque le cadre 24 est associé plus de 3 secondes à un élément graphique 16 donné, une image illustrative, un résumé du programme, etc. attribués à la carte de programme associée à l'élément graphique 16 peuvent être affichés.

En outre, la réception d'une commande de navigation le long de l'axe temporel 13 par le module de commande 10 (étape 35) entraîne également une initialisation d'un compteur de temps écoulé (étape 37). Le module de commande 10 surveille en continu si le compteur de temps écoulé atteint un seuil prédéterminé (étape 38), par exemple de 3 secondes.

Tant que le compteur de temps écoulé n'a pas atteint le seuil, le module de commande 10 reste dans l'attente d'une nouvelle commande de navigation le long de l'axe temporel 13 (étape 39) tout en continuant (étape 40) à surveiller le temps écoulé (étape 38).

Lorsque le module de commande 10 reçoit une nouvelle commande de navigation le long de l'axe temporel 13 avant que le compteur n'ait atteint le seuil, alors il modifie l'association entre l'élément graphique 16 et le cadre 24 (étape 36) comme indiqué ci-dessus et réinitialise le compteur de temps écoulé (étape 37).

Lorsque le compteur atteint le seuil sans qu'une nouvelle commande de navigation le long de l'axe temporel 13 ne soit reçue par le module de commande 10, alors le module de commande 10 modifie la carte active (étape 41) pour sélectionner en tant que nouvelle carte active la carte de programme associée à l'élément graphique 16 sur lequel est affiché le cadre 24.

Après avoir modifié la sélection de la carte active (étape 41), le module de commande 10 redéfinit l'instant de diffusion cible. Pour cela, le module de commande re-détermine l'instant présent (étape 23) et définit un nouvel horaire de diffusion cible (étapes 29 à 33) en fonction de l'instant présent et de la nouvelle carte active puis reste en attente d'une nouvelle commande de navigation (étape 34).

Ainsi, la carte active n'est modifiée que si l'utilisateur déplace le cadre 24 dans l'interface graphique 6 le long de l'axe temporel 13 et s'attarde sur un programme au-delà d'un certain temps, par exemple 3 secondes, évitant ainsi de modifier la carte active et l'instant de diffusion cible lorsque l'utilisateur envoie une série de commandes de navigation le long de l'axe temporel 13 afin de déplacer le cadre 24 d'un grand nombre d'éléments graphiques 16 dans l'interface graphique 6.

La réception d'une commande de navigation le long de l'axe des chaînes 14 n'a pas d'influence sur le compteur de temps écoulé ni sur la modification de la carte active. Seule l'association entre le cadre 24 et l'élément graphique 16 est modifiée en réponse à la réception d'une commande de navigation le long de l'axe des chaînes 14. Cette absence de modification de la carte active lors de déplacements le long de l'axe des chaînes 14 évite des déplacements erratiques du cadre 24 lors de la réception de commandes de navigation le long de l'axe des chaînes 14. Ainsi, lorsque le cadre 24 a été déplacé sur l'interface graphique suite à la réception d'une commande de navigation le long de l'axe des chaînes 14 (étape 36), le module de commande 10 reste (étape 43) en attente d'une nouvelle commande de navigation (étape 35).

Dans un mode de réalisation non illustré, la commande de navigation le long de l'axe temporel 13 peut également correspondre à l'indication d'une plage horaire de diffusion prédéterminée. Cette plage horaire de diffusion peut être définie de nombreuses manières, par exemple manuellement par l'utilisateur ou encore l'activation d'une commande correspondant à une plage horaire stockée dans la mémoire du boîtier d'accès 3 ou autre. Lorsque le module de commande reçoit une commande de navigation le long de l'axe temporel 13 correspondant à une plage horaire prédéterminée, l'interface graphique est modifiée pour sélectionner (étapes 20 à 22) et afficher (étape 23) les cartes de programmes diffusée durant cette plage horaire prédéterminée. De même, une nouvelle carte active est déterminée (étape 25) et le module de commande 10 passe directement à l'attente d'une nouvelle commande de navigation (étape 34).

Des exemples de déplacement du cadre 24 sont décrits ci-après en regard des figures 3 à 7, qui permettent notamment de comprendre le rôle du paramètre d'instant de diffusion cible.

Lorsque le cadre 24 est disposé sur l'une des lignes comprises entre la première ligne du tableau 15 et l'avant avant dernière ligne du tableau 15, une commande de navigation correspondant à un déplacement en direction de la dernière ligne du tableau 15 entraîne simplement un déplacement du cadre 24 sur la ligne suivante et une association du cadre 24 sur l'élément graphique 16 diffusé à l'instant de diffusion cible.

Sur la figure 3 le cadre 24 est associé à un programme P3 de la chaîne de diffusion C2 situé sur la seconde ligne du tableau 15. L'instant présent étant d'une part postérieur à l'heure de début de diffusion du programme P3 et, d'autre part, antérieur à l'instant de fin de diffusion du programme P3, le programme P3 est en dans l'état « diffusion en cours » et l'instant de diffusion cible prend pour valeur l'instant présent. Si l'utilisateur partant de l'interface graphique 6 illustrée par la figure 3, souhaite consulter la chaîne de diffusion C3, il envoie une commande de navigation vers le bas (en direction de la dernière ligne du tableau 15) au module de commande 10. A réception de cette commande de navigation, le module de commande 10 déplace le cadre 24 sur la troisième ligne du tableau 15 et associe le cadre 24 à l'élément graphique 16 correspondant au programme P4 en cours de diffusion sur la chaîne C3 à l'instant présent. En effet, le paramètre d'instant de diffusion cible est égal à l'instant présent dans ce cas.

A contrario, une commande de navigation vers le bas depuis l'interface graphique illustrée sur la figure 7 modifierait le cadre 24 pour l'associer à l'élément graphique P8. En effet, l'instant présent est antérieur à l'horaire de début de diffusion du programme P19 de sorte que le programme P19 est dans l'état « pas de diffusion en cours ». L'instant de diffusion cible serait donc l'instant de début de diffusion du programme P19 et le programme sur la chaîne C4 qui est diffusé à l'horaire de début de diffusion du programme P19 est le programme P8.

Par mesure didactique, on note que si sur la figure 3, le paramètre d'instant de diffusion cible était fixé à l'heure de début de diffusion de la carte active P3, une commande de navigation vers le bas aurait abouti à sélectionner le programme P30.

Lorsque le cadre 24 est disposé sur l'une des lignes comprises entre la troisième ligne du tableau 15 et la dernière ligne du tableau 15, une commande de navigation correspondant à un déplacement vers le haut (en direction de la première ligne du tableau 15) entraîne un déplacement du cadre 24 vers le haut. Ainsi, une commande de navigation vers le haut depuis l'interface graphique illustré sur la figure 4 amène l'utilisateur sur l'interface graphique illustrée sur la figure 3. Dans le cas de la figure 4, le paramètre d'instant de diffusion cible est égal à l'instant présent.

Lorsque le cadre 24 est situé sur la seconde ligne du tableau 15 et que la commande de navigation correspond à un déplacement vers le haut (en direction de la première ligne), le module de commande 10 contrôle si au moins une chaine de diffusion non encore affichée précède dans la série de chaînes de diffusion.

Si la série de chaîne de diffusion comporte au moins une chaîne de diffusion précédente, alors le module de commande 10 modifie la portion affichable du tableau de programmes 15 de manière à afficher la chaîne précédente. Comme la portion affichable ne change pas de taille, la dernière chaîne de diffusion est simultanément supprimée de l'interface graphique. Le cadre 24 est alors conservé sur la seconde ligne du tableau 15.

Lorsque la navigation atteint la première chaîne de diffusion de la série, le cadre 24 est simplement déplacé sur la première ligne du tableau 15.

De manière analogue, lorsque le cadre 24 est disposé sur l'avant dernière ligne du tableau 15 et que la commande de navigation correspond à un déplacement vers le bas (en direction de la dernière ligne du tableau 15), le module de commande 10 contrôle si au moins une chaine de diffusion suit dans la série de chaîne de diffusion.

Si la série de chaîne de diffusion comporte des chaînes de diffusions non encore affichées, le cadre 24 demeure sur l'avant dernière ligne du tableau 15 et la portion affichable est modifiée. Plus particulièrement, la chaîne suivante est affichée et la première chaîne de diffusion de la portion affichable disparait.

Si la chaîne de diffusion sélectionnée est la dernière chaîne de diffusion de la série de chaînes de diffusion, le cadre 24 est sur la dernière ligne du tableau 15.

Typiquement, le cadre 24 ne peut être disposé sur la première ligne ou la dernière ligne du tableau 15 que lorsque les chaînes de diffusions sélectionnées sont respectivement la première chaîne de diffusion ou la dernière chaîne de diffusion de la série de chaîne de diffusion.

Dans un mode de réalisation préférentiel, l'affichage des chaînes de diffusion est réalisé de manière cyclique. Ainsi, lorsque le cadre 24 est disposé sur la première ligne du tableau 15, c'est-à-dire que le cadre 24 est associé à un élément graphique 16 correspondant à une carte de programme de la première chaîne de diffusion de la série de chaîne de diffusion, une commande de navigation vers le haut entraîne la sélection et l'affichage des six dernières chaînes de diffusion de la série de chaîne de diffusion et le positionnement du cadre 24 sur la dernière ligne du tableau 15. Inversement, lorsque le cadre 24 est disposé sur la dernière ligne du tableau 15, c'est-à-dire que le cadre 24 est associé est associé à un élément graphique 16 correspondant à une carte de programme appartenant à la dernière chaîne de diffusion de la série de chaîne de diffusion, une commande de navigation vers le bas entraîne une modification de la sélection des chaînes de diffusion sélectionnées pour sélectionner les six premières chaînes de diffusion de la série de chaînes de diffusion et le cadre 24 est positionné sur la première ligne du tableau 15.

Lorsque le module de commande 10 reçoit une commande de navigation correspondant à un déplacement postérieur le long de l'axe temporel 13 et que l'élément graphique 16 sur lequel est affiché le cadre 24 correspond à un programme dont l'horaire de fin de programme est antérieur à l'horaire de fin d'affichage 18, le cadre 24 est associé à l'élément graphique 16 suivant le long de l'axe temporel 13 de la même ligne du tableau 15. Ainsi, une commande de navigation vers la droite depuis l'interface graphique 6 illustrée sur la figure 4 amène l'utilisateur sur l'interface graphique illustrée sur la figure 5.

Lorsque le module de commande 10 reçoit une commande de navigation correspondant à un déplacement postérieur le long de l'axe temporel 13 et que l'élément graphique 16 sur lequel est affiché le cadre 24 correspond à un programme dont l'horaire de fin de programme est postérieur à l'horaire de fin d'affichage 18, le module de commande modifie l'horaire de début d'affichage 17, l'horaire de fin d'affichage 18 et la sélection des cartes de programme. Dans ce cas, l'horaire de début 17 d'affichage est modifié pour correspondre à l'horaire de fin d'affichage actuel et l'horaire de fin d'affichage 18 est modifié pour correspondre à l'horaire de fin d'affichage actuel incrémenté d'une durée prédéterminée, par exemple 2h30 sur les figures 3 à 7. En outre, la portion affichable est modifiée pour afficher les cartes de programme diffusées entre le nouvel horaire de début d'affichage et le nouvel horaire de fin d'affichage. Le cadre 24 est alors associé à l'élément graphique 16 correspondant à la carte active. Ainsi, en partant de l'interface graphique 6 illustrée sur la figure 3, le programme P3 de la chaîne C2 ayant un horaire de fin de diffusion postérieur à l'horaire de fin d'affichage actuel de 18h30, une commande de navigation vers la droite amènera l'utilisateur sur l'interface graphique 6 illustrée sur la figure 6 illustrant les programmes diffusés entre 18h30 et 21h00 sur les chaînes C1 à C6, le cadre 24 étant positionné sur l'élément graphique correspondant au programme P3.

Egalement, quand la carte active présente un horaire de fin de diffusion égal à l'horaire de fin d'affichage 18, alors une commande de navigation vers la droite modifie la carte active pour sélectionner en tant que carte active la carte de programme postérieure à la carte active en cours de la même chaine de diffusion. Cette modification de la carte active peut éventuellement avoir lieu après écoulement du compteur de temps écoulé comme indiqué ci-dessus. Le cadre 24 est alors positionné sur l'élément graphique 16 correspondant à la nouvelle carte active. Ainsi, en partant de l'interface graphique 6 illustrée sur la figure 5, le programme P5 de la chaîne C3 ayant un horaire de fin de diffusion égal à l'horaire de fin d'affichage de 18h30, une commande de navigation vers la droite amènera l'utilisateur sur l'interface graphique 6 illustrée sur la figure 7 illustrant les programmes diffusés entre 18h30 et 21h00 sur les chaînes C1 à C6, le cadre 24 étant positionné sur le programme P19 qui est le programme suivant le programme P5 de la chaîne de diffusion C3.

Inversement, lorsque le module de commande reçoit une commande de navigation correspondant à un déplacement antérieur le long de l'axe temporel 13 et que l'élément graphique 16 sur lequel est affiché le cadre 24 correspond à un programme dont l'horaire de début de diffusion est postérieur à l'horaire de début d'affichage 17, le module de commande modifie l'association entre le cadre 24 et l'élément graphique 16 pour afficher le cadre 24 sur l'élément graphique 16 précédant le long de l'axe temporel 13 de la même ligne du tableau 15. Ainsi, une commande de navigation vers la gauche depuis l'interface graphique 6 illustré sur la figure 5 amène l'utilisateur sur l'interface graphique illustré sur la figure 4.

Dans un mode de réalisation préférentiel, lorsque le module de commande 10 reçoit une commande de navigation correspondant à un déplacement antérieur le long de l'axe temporel 13 et que l'élément graphique 16 sur lequel est affiché le cadre 24 correspond à un programme en cours de diffusion, le boîtier d'accès 3 peut proposer une fonction de re-visionnage de programmes déjà diffusés. Dans un autre mode de réalisation, la réception par le module de commande 10 d'une commande correspondant à un déplacement antérieur le long de l'axe temporel 13 et que l'élément graphique 16 sur lequel est affiché le cadre 24 correspond à un programme en cours de diffusion, le module de commande 10 peut afficher un message contextuel d'erreur. Dans un autre mode de réalisation, la navigation dans l'interface graphique 6 le long de l'axe temporel 13 permet de consulter les programmes antérieurs à l'instant présent de manière analogue à la consultation des programmes futurs telle que décrite ci-dessus.

Lorsque le module de commande 10 reçoit une commande de navigation correspondant à un déplacement antérieur le long de l'axe temporel 13 et que l'élément graphique 16 sur lequel est affiché le cadre 21 correspond à un programme dont l'horaire de début de diffusion est antérieur à l'horaire de début d'affichage 17, le module de commande modifie l'horaire de début d'affichage 17, l'horaire de fin d'affichage 18 et donc la portion affichable. Dans ce cas, l'horaire de fin d'affichage 18 est modifié pour correspondre à l'horaire de début d'affichage actuel et l'horaire de début d'affichage 17 est modifié pour correspondre à l'horaire de début d'affichage actuel décrémenté d'une durée prédéterminée, par exemple 2h30. En outre, la portion affichable est modifiée pour afficher les cartes de programme appartenant aux chaînes de diffusions sélectionnées entre le nouvel horaire de début d'affichage et le nouvel horaire de fin d'affichage. Le cadre 24 est toujours associé à l'élément graphique 16 correspondant à la carte active. Ainsi, en partant de l'interface graphique 6 illustré sur la figure 6, le programme P3 de la chaîne C2 ayant un horaire de début de diffusion antérieur à l'horaire de début d'affichage 17 de 18h30, une commande de navigation vers la gauche amènera l'utilisateur sur l'interface graphique 6 illustrée sur la figure 3 illustrant les programmes diffusés entre 16h00 et 18h30 sur les chaînes C1 à C6, le cadre 24 étant positionné sur le programme P3.

Egalement quand la carte active présente un horaire de début de diffusion égal à l'horaire de début d'affichage 17, une commande de navigation vers la gauche modifie la carte active pour sélectionner en tant que nouvelle carte active la carte de programme précédant la carte active actuelle et appartenant à la même chaîne de diffusion. Cette modification de la carte active peut éventuellement avoir lieu après écoulement du compteur de temps écoulé comme indiqué ci-dessus. Le cadre 24 est alors positionné sur l'élément graphique 16 correspondant à la nouvelle carte active. Ainsi, en partant de l'interface graphique 6 illustré sur la figure 7, le programme P19 de la chaîne C3 ayant un horaire de début de diffusion égal à l'horaire de début d'affichage de 18h30, une commande de navigation vers la gauche amènera l'utilisateur sur l'interface graphique 6 illustrée sur la figure 5 illustrant les programmes diffusés entre 16h00 et 18h30 sur les chaînes C1 à C6, le cadre 21 étant positionné sur le programme P5 qui est le programme précédant le programme P19 de la chaîne de diffusion C3.

L'utilisateur peut sortir de l'interface graphique 6 par tout moyen adapté, par exemple à l'aide d'un bouton dédié de la télécommande 9. Un tel bouton dédié de la télécommande est par exemple un bouton « menu » permettant de revenir à une interface graphique de gestion du boîtier d'accès 3 ou encore un bouton « retour » permettant de retourner au dernier écran affiché avant d'entrer dans l'interface graphique 6 de guide des programmes. Dans un autre mode de réalisation, l'interface graphique 6 de guide des programmes comporte un élément graphique indépendant (non illustré) permettant de retourner au menu général de gestion du boîtier d'accès 3.

Un marquage spécifique peut être appliqué sur chaque programme débutant ou en cours de diffusion à l'instant présent. Les programmes terminés antérieurement à l'heure actuelle ne sont pas nécessairement affichés, l'interface graphique 6 affichant alors un élément graphique spécifique 42 correspondant aux programmes terminés, par exemple grisée. Ainsi, la ligne illustrant la chaîne C3 sur la figure 3 présente un programme P4 en cours de diffusion à l'heure actuelle mais dont l'heure de début de diffusion est de 16h30. Par conséquent, la ligne correspondant à la chaîne C3 comporte l'élément graphique spécifique 42 entre 16h00 et 16h30

L'interface graphique 6 peut comporter une fenêtre contextuelle (non illustrée) affichée en superposition ou dans un espace distinct du tableau 15 afin de donner à l'utilisateur des informations complémentaires sur le programme associé au cadre 24 ou à la carte active. Cette fenêtre contextuelle comporte par exemple le titre et un résumé du programme, son genre, ou encore des options telles que des options d'enregistrement ou de sélection d'affichage sur le téléviseur 1 du programme en cours de diffusion sur la chaîne correspondante.

Bien que l'invention ait été décrite en liaison avec plusieurs modes de réalisation particuliers, ii est bien évident qu'eiie n'y est nuiiement limitée. L'étendue de la protection est déterminée par les revendication annexées.

Ainsi, dans un mode de réalisation non illustré, la sélection des chaînes de diffusion affichées le long de l'axe des chaînes peut être réalisé de manière analogue à la sélection des cartes de programmes affichées le long de l'axe temporel 13. Ainsi, par exemple, la modification des chaînes de diffusion affichées le long de l'axe des chaînes peut se faire par groupe de 5 chaînes de diffusions en groupe de 5 chaînes de diffusions. Dans ce mode de réalisation, le cadre 24 peut alors être associé à la dernière ligne ou la première ligne du tableau 15 sans que ladite ligne du tableau 15 ne soit forcément la dernière ou la première ligne de la série de chaînes de diffusion.

Certains des éléments représentés, notamment les composants du boitier d'accès et du module de commande, peuvent être réalisés sous différentes formes, de manière unitaire ou distribuée, au moyen de composants matériels et/ou logiciels. Des composants matériels utilisables sont les circuits intégrés spécifiques ASIC, les réseaux logiques programmables FPGA ou les microprocesseurs. Des composants logiciels peuvent être écrits dans différents langages de programmation, par exemple C, C++, Java ou VHDL. Cette liste n'est pas exhaustive.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Procédé de navigation dans une interface graphique (6) représentant un guide des programmes, l'interface graphique comportant :
- une pluralité de séries de cartes de programmes, chaque série de cartes de programmes étant associée à une chaîne de diffusion respective, chaque carte de programme représentant un programme à diffuser par ladite chaîne de diffusion associée, chaque carte de programme étant associée à une pluralité d'attributs de programme incluant un instant de début de programme et un instant de fin de programme, les cartes de programme d'une série de cartes de programmes étant positionnées par ordre chronologique le long d'un premier axe de l'interface graphique (13), la pluralité de séries de cartes de programmes étant positionné le long d'un deuxième axe de l'interface graphique (14), chaque carte de programme ayant une dimension le long du premier axe de l'interface graphique proportionnelle à une durée de programme attribuée à ladite carte de programme,
- un pointeur de carte active (24) déplaçable dans l'interface graphique en réponse à des commandes de navigation, le pointeur (24) se déplaçant par sauts entre cartes de programme, le pointeur (24) se déplaçant le long du premier axe (13) dans une série de cartes de programme en réponse à une commande de navigation le long du premier axe (13), le pointeur (24) se déplaçant d'une série de cartes de programme à l'autre en réponse à une commande de navigation le long du deuxième axe (14), la carte de programme de l'interface graphique sur laquelle le pointeur (24) est positionné constituant la carte active de l'interface graphique,
dans lequel le procédé de navigation dans l'interface graphique comporte :
- sélectionner (20) une portion affichable de l'interface graphique, ladite portion affichable comportant une partie des séries de cartes de programmes de la pluralité de série de cartes de programmes et, pour chaque série de carte de programme de la partie de séries de cartes de programme, les cartes de programmes desdites séries de cartes de programmes destinées à être diffusées entre un instant de début d'affichage (17) et un instant de fin d'affichage (18), la portion affichable de l'interface graphique comportant en outre la carte active, et afficher la portion affichable sur un dispositif d'affichage,
- déterminer (26) un instant présent,
- déterminer un état de diffusion du programme associé à ia carte active parmi les états « diffusion en cours » et « pas de diffusion en cours » selon que l'instant présent se trouve ou non entre l'instant de début de programme et l'instant de fin de programme attribués à la carte active,
- fixer un paramètre d'instant de diffusion cible égal à l'instant présent en réponse à la détection que l'état de diffusion du programme associé à la carte active est « diffusion en cours », et égal à l'instant de début de programme attribué à la carte active en réponse à la détection que l'état de diffusion du programme associé à la carte active est « pas de diffusion en cours »,
- recevoir (35) une commande de navigation présentant une direction de navigation le long du deuxième axe de l'interface graphique,
- déplacer (36) le pointeur pour sélectionner en tant que carte active une carte de programme positionnée dans la série de cartes de programmes correspondant à la direction de navigation et destinée à être diffusée à l'instant de diffusion cible.

2. Procédé de navigation dans une interface graphique selon la revendication 1, dans lequel l'étape de fixer le paramètre d'instant de diffusion cible est exécuté en réponse à la réception de commande de navigation le long du premier axe de l'interface graphique.

3. Procédé de navigation dans un interface graphique selon la revendication 2, dans lequel l'étape de fixer le paramètre d'instant de diffusion cible est exécutée en réponse à l'expiration d'un compteur de temps, le procédé comportant en outre
- réinitialiser (37) le compteur de temps à une durée positive déterminée à chaque réception de commande de navigation le long du premier axe de l'interface graphique.

4. Procédé de navigation dans une interface graphique selon l'une des revendications 1 à 3, dans lequel l'étape d'afficher la portion affichable de l'interface graphique comporte en outre, pour chaque carte de programme de la portion affichable de l'interface graphique en cours de diffusion à l'instant présent, afficher un marquage positionné sur ladite carte de programme en cours de diffusion à l'instant présent.

5. Procédé de navigation dans une interface graphique selon l'une des revendications 1 à 4, dans lequel la pluralité de séries de cartes de programmes est positionnée le long du deuxième axe de l'interface graphique de manière cyclique.

6. Procédé de navigation dans une interface graphique selon l'une des revendications 1 à 5, comportant en outre :
- recevoir une commande de plage de diffusion, un instant de début d'affichage prédéterminé et un instant de fin d'affichage prédéterminé étant associés à la commande de plage de diffusion,
- modifier la portion affichable de l'interface graphique pour sélectionner, pour chaque série de carte de programme de la portion affichable de l'interface graphique, les cartes de programme desdites séries de cartes de programme comprises entre l'instant de début d'affichage prédéterminé et l'instant de fin d'affichage prédéterminé,
- modifier l'instant de diffusion cible pour définir en tant qu'instant de diffusion cible un instant de diffusion prédéterminé dans ladite plage de diffusion,
- disposer le pointeur pour sélectionner en tant que carte active la carte de programme destinée à être diffusée à l'instant de diffusion cible.

7. Procédé de navigation dans une interface graphique selon l'une des revendications 1 à 5, comportant en outre :
- recevoir une commande de navigation présentant une direction de navigation le long du premier axe de l'interface graphique correspondant à un instant postérieur,
- comparer un instant de fin de diffusion attribué à la carte active et l'instant de fin d'affichage de la portion affichable de l'interface graphique,
- modifier la portion affichable de l'interface graphique pour sélectionner, pour chaque série de carte de programme de la portion affichable de l'interface graphique, les cartes de programme desdites séries de cartes de programme comprises entre l'instant de fin d'affichage de la portion affichable de l'interface graphique et l'instant de fin d'affichage de la portion affichable de l'interface graphique incrémenté d'une durée prédéterminée, en réponse à la détection d'un instant de fin de diffusion attribué à la carte active postérieur ou identique à l'instant de fin d'affichage de l'interface graphique.

8. Procédé de navigation dans une interface graphique selon la revendication 7, comportant en outre :
- disposer le pointeur pour sélectionner en tant que carte active la carte de programme positionnée dans la position suivant la position de la carte active le long du premier axe de l'interface graphique en réponse à la détection d'un instant de fin de diffusion attribué à la carte active égal à l'instant de fin d'affichage.

9. Procédé de navigation dans une interface graphique selon l'une des revendications 1 à 5, dans lequel le procédé de navigation comporte en outre :
- recevoir une commande de navigation présentant une direction de navigation le long du premier axe de l'interface graphique correspondant à un instant antérieur,
- comparer l'instant de début d'affichage de la portion affichable de l'interface graphique et l'instant de début de diffusion attribué à la carte active,
- modifier la portion affichable de l'interface graphique pour sélectionner pour chaque série de carte de programme de la portion affichable de l'interface graphique, les cartes de programme desdites séries de cartes de programme comprises entre l'instant de début d'affichage de la portion affichable de l'interface graphique et l'instant de début d'affichage de la portion affichable de l'interface graphique décrémenté d'une durée prédéterminée en réponse à la détection d'un instant de début de diffusion attribué à la carte active antérieur ou identique à l'instant de début d'affichage de l'interface graphique.

10. Procédé de navigation dans une interface graphique selon la revendication 9, comportant en outre :
- disposer le pointeur pour sélectionner en tant que carte active la carte de programme positionnée dans la position précédant la position de la carte active en réponse à la détection d'un instant de début de diffusion attribué à la carte active identique à l'instant de début d'affichage de l'interface graphique.

11. Dispositif de génération d'une interface graphique comportant un module de commande configuré pour
- générer une interface graphique (6) comportant une pluralité de séries de cartes de programmes, chaque série de cartes de programmes étant associée à une chaîne de diffusion respective, chaque carte de programme représentant un programme à diffuser par ladite chaîne de diffusion associée, chaque carte de programme étant associée à une pluralité d'attributs de programme incluant un instant de début de programme et un instant de fin de programme de programme, les cartes de programme d'une série étant positionnées par ordre chronologique le long d'un premier axe (13) de l'interface graphique, la pluralité de séries étant positionné le long d'un deuxième axe (14) de l'interface graphique, chaque carte de programme ayant une dimension le long du premier axe proportionnelle une durée de programme attribué à ladite carte de programme,
- sélectionner une portion affichable de l'interface graphique, ladite portion affichable comportant une partie des séries de cartes de programmes de la pluralité de série de cartes de programmes et, pour chaque série de carte de programme de la partie de séries de cartes de programme, les cartes de programmes desdites séries de cartes de programmes destinées à être diffusées entre un instant de début d'affichage (17) et un instant de fin d'affichage (18), la portion affichable de l'interface graphique comportant en outre la carte active, et afficher la portion affichable sur un dispositif d'affichage,
- générer un pointeur de carte active (24) déplaçable dans l'interface graphique en réponse à des commandes de navigation, le pointeur (24) se déplaçant par sauts entre cartes de programme, le pointeur (24) se déplaçant le long du premier axe (13) dans une série de cartes de programme en réponse à une commande de navigation le long du premier axe (13), le pointeur (24) se déplaçant d'une série de cartes de programme à l'autre en réponse à une commande de navigation le long du deuxième axe (14), la carte de programme de l'interface graphique sur laquelle le pointeur (24) est positionné constituant la carte active de l'interface graphique,
- sélectionner une carte de programme en tant que carte active,
- déterminer (26) un instant présent,
- déterminer un état de diffusion du programme associé à la carte active parmi les états « diffusion en cours » et « pas de diffusion en cours » selon que l'instant présent se trouve ou non entre l'instant de début de programme et l'instant de fin de programme attribués à la carte active,
- fixer un paramètre d'instant de diffusion cible égal à l'instant présent en réponse à la détection que l'état de diffusion de la carte active est « diffusion en cours », et égal à l'instant de début de programme attribué à la carte active en réponse à la détection que l'état de diffusion de la carte active est « pas de diffusion en cours »,
- recevoir une commande de navigation présentant une direction de navigation le long du deuxième axe (14) de l'interface graphique,
- déplacer le pointeur (24) pour sélectionner en tant que carte active une carte de programme positionnée dans la série de cartes de programmes correspondant à la direction de navigation et destinée à être diffusée à l'instant de diffusion cible.

## Patentansprüche

1. Verfahren zur Navigation in einer graphischen Schnittstelle (6), die einen Programmführer darstellt, wobei die graphische Schnittstelle umfasst:
- eine Vielzahl von Programmkartenreihen, wobei jede Programmkartenreihe einem jeweiligen Sendekanal zugeordnet ist, wobei jede Programmkarte ein auf dem zugeordneten Sendekanal zu sendendes Programm darstellt, wobei jede Programmkarte einer Vielzahl von Programmattributen zugeordnet ist, die einen Zeitpunkt des Programmbeginns und einen Zeitpunkt des Programmendes enthalten, wobei die Programmkarten einer Programmkartenreihe entlang einer ersten Achse (13) der graphischen Schnittstelle chronologisch angeordnet sind, wobei die Vielzahl von Programmkartenreihen entlang einer zweiten Achse (14) der graphischen Schnittstelle angeordnet sind, wobei jede Programmkarte entlang der ersten Achse der graphischen Schnittstelle eine Dimension hat, die proportional zur einer dieser Programmkarte zugeordneten Programmdauer ist,
- einen aktiven Kartenzeiger (24), der als Reaktion auf Navigationsbefehle in der graphischen Schnittstelle bewegbar ist, wobei sich der Zeiger (24) zwischen den Programmkarten sprungartig bewegt, wobei sich der Zeiger (24) als Reaktion auf einen Navigationsbefehl entlang der ersten Achse (13) in einer Programmkartenreihe entlang der ersten Achse (13) in einer Programmkartenreihe bewegt, wobei sich der Zeiger (24) als Reaktion auf einen Navigationsbefehl entlang der zweiten Achse (14) von einer Programmkartenreihe zur anderen bewegt, wobei die Programmkarte der graphischen Schnittstelle, an welcher der Zeiger (24) positioniert ist, die aktive Karte der graphischen Schnittstelle bildet;
wobei das Verfahren zur Navigation in der graphischen Schnittstelle umfasst:
- das Wählen (20) eines anzeigbaren Bereichs der graphischen Schnittstelle, wobei der anzeigbare Bereich einen Teil der Programmkartenreihen der Vielzahl von Programmkartenreihen und für jede Programmkartenreihe des Teils der Programmkartenreihen die Programmkarten der Programmkartenreihen umfasst, die zum Senden zwischen einer Anfangszeit (17) der Anzeige und einer Endzeit (18) der Anzeige bestimmt sind, wobei der anzeigbare Bereich der graphischen Schnittstelle ferner die aktive Karte einschließt, und das Anzeigen des anzeigbaren Bereichs auf einer Anzeigevorrichtung,
- das Bestimmen (26) eines gegenwärtigen Zeitpunkts;
- das Einordnen eines Sendestatus des der aktiven Karte zugeordneten Programms unter die Sendestatus «laufende Sendung» und «keine laufende Sendung», abhängig davon, ob der gegenwärtige Zeitpunkt zwischen dem der aktiven Karte zugeordneten Zeitpunkt des Programmbeginns und dem Zeitpunkt des Programmendes liegt oder nicht,
- das Festlegen eines Zielparameters für den Sendezeitpunkt, der gleich einem gegenwärtigen Zeitpunkt ist, als Reaktion auf die Erkennung, dass der Sendestatus des der aktiven Karte zugeordneten Programms dem Status «laufende Sendung» entspricht, und der gleich dem der aktiven Karte zugeordneten Zeitpunkt des Programmbeginns ist, als Reaktion auf die Erkennung, dass der Sendestatus des der aktiven Karte zugeordneten Programms dem Status «keine laufende Sendung» entspricht,
- das Empfangen (35) eines Navigationsbefehls, der eine Navigationsrichtung entlang der zweiten Achse der graphischen Schnittstelle angibt,
- das Bewegen (36) des Zeigers, um als aktive Karte eine Programmkarte zu wählen, die in der Programmkartenreihe entsprechend der Navigationsrichtung angeordnet ist und die zum Senden zum vorgegebenen Sendezeitpunkt bestimmt ist.

2. Verfahren zur Navigation in einer graphischen Schnittstelle nach Anspruch 1, wobei der Schritt des Festlegens des Zielparameters für den Sendezeitpunkt als Reaktion auf den Empfang des Navigationsbefehls entlang der ersten Achse der graphischen Schnittstelle ausgeführt wird.

3. Verfahren zur Navigation in einer graphischen Schnittstelle nach Anspruch 2, wobei der Schritt des Festlegens des Zielparameters für den Sendezeitpunkt als Reaktion auf den Ablauf eines Zeitzählers ausgeführt wird, wobei das Verfahren ferner umfasst:
- das Zurücksetzen (37) des Zeitzählers auf eine positive Dauer, die bei jedem Empfang des Navigationsbefehls entlang der ersten Achse der graphischen Schnittstelle bestimmt wird.

4. Verfahren zur Navigation in einer graphischen Schnittstelle nach einem der Ansprüche 1 bis 3, wobei der Schritt des Anzeigens des anzeigbaren Bereichs der graphischen Schnittstelle ferner umfasst, dass für jede Programmkarte des anzeigbaren Bereichs der graphischen Schnittstelle während der Sendung zum gegenwärtigen Zeitpunkt eine Markierung angezeigt wird, die in jener Programmkarte angeordnet ist, die zum gegenwärtigen Zeitpunkt gerade gesendet wird.

5. Verfahren zur Navigation in einer graphischen Schnittstelle nach einem der Ansprüche 1 bis 4, wobei die Vielzahl von Programmkartenreihen entlang der zweiten Achse der graphischen Schnittstelle zylinderförmig positioniert sind.

6. Verfahren zur Navigation in einer graphischen Schnittstelle nach einem der Ansprüche 1 bis 5, ferner umfassend:
- das Empfangen eines Befehls für den Sendebereich, wobei dem Befehl für den Sendebereich ein vorgegebener Zeitpunkt des Beginns der Anzeige und ein vorgegebener Zeitpunkt des Endes der Anzeige zugeordnet werden,
- das Ändern des anzeigbaren Bereichs der graphischen Schnittstelle, um für jede Programmkartenreihe des anzeigbaren Bereichs der graphischen Schnittstelle die Programmkarten der Programmkartenreihen zu wählen, die zwischen dem vorgegebenen Zeitpunkt des Beginns der Anzeige und dem vorgegebenen Zeitpunkt des Endes der Anzeige liegen,
- das Ändern des Sende-Zielzeitpunkts, um als Sende-Zielzeitpunkt einen vorgegebenen Sendezeitpunkt in dem genannten Sendebereich zu definieren,
- das Anordnen des Zeigers, um als aktive Karte die Programmkarte zu wählen, die zum Senden zum Sende-Zielzeitpunkt bestimmt ist.

7. Verfahren zur Navigation in einer graphischen Schnittstelle nach einem der Ansprüche 1 bis 5, ferner umfassend:
- das Empfangen eines Navigationsbefehls, der eine Navigationsrichtung entlang der ersten Achse der graphischen Schnittstelle angibt, die einem späteren Zeitpunkt entspricht,
- das Vergleichen eines der aktiven Karte zugeordneten Endzeitpunkts der Sendung und eines Endzeitpunkts der Anzeige des anzeigbaren Bereichs der graphischen Schnittstelle,
- das Ändern des anzeigbaren Bereichs der graphischen Schnittstelle, um für jede Programmkartenreihe des anzeigbaren Bereichs der Schnittstelle die Programmkarten solcher Programmkartenreihen zu wählen, die zwischen dem Endzeitpunkt der Anzeige des anzeigbaren Bereichs der graphischen Schnittstelle und dem um eine vorgegebene Dauer inkrementierten Endzeitpunkt der Anzeige des anzeigbaren Bereichs der Schnittstelle liegen, als Reaktion auf die Erkennung eines der aktiven Karte zugeordneten Endzeitpunkts der Sendung, der später als der Endzeitpunkt der Anzeige der graphischen Schnittstelle liegt oder mit diesem identisch ist.

8. Verfahren zur Navigation in einer graphischen Schnittstelle nach Anspruch 7, ferner umfassend:
- das Anordnen des Zeigers, um als aktive Karte die Programmkarte zu wählen, die entlang der ersten Achse der graphischen Schnittstelle in der auf die Position der aktiven Karte folgenden Position angeordnet ist, als Reaktion auf die Erkennung eines der aktiven Karte zugeordneten Endzeitpunkts der Sendung, der gleich dem Endzeitpunkt der Anzeige entspricht.

9. Verfahren zur Navigation in einer graphischen Schnittstelle nach einem der Ansprüche 1 bis 5, wobei das Navigationsverfahren ferner umfasst:
- das Empfangen eines Navigationsbefehls, der eine Navigationsrichtung entlang der ersten Achse der graphischen Schnittstelle angibt, die einem früheren Zeitpunkt entspricht,
- das Vergleichen des Zeitpunkts des Beginns der Anzeige des anzeigbaren Bereichs der graphischen Schnittstelle und des der aktiven Karte zugeordneten Zeitpunkts des Sendebeginns,
- das Ändern des anzeigbaren Bereichs der graphischen Schnittstelle, um für jede Programmkartenreihe des anzeigbaren Bereichs der graphischen Schnittstelle die Programmkarten der Programmkartenreihen zu wählen, die zwischen dem Zeitpunkt des Beginns der Anzeige des anzeigbaren Bereichs der graphischen Schnittstelle und dem um eine vorgegebene Dauer dekrementierten Zeitpunkt des Beginns der Anzeige des anzeigbaren Bereichs der graphischen Schnittstelle liegen, als Reaktion auf die Erkennung eines der aktiven Karte zugeordneten Zeitpunkts des Sendebeginns, der vor dem Zeitpunkt des Beginns der Anzeige der graphischen Schnittstelle liegt oder identisch mit diesem ist.

10. Verfahren zur Navigation in einer graphische Schnittstelle nach Anspruch 9, ferner umfassend:
- das Anordnen des Zeigers, um als aktive Karte die Programmkarte zu wählen, die in der Position angeordnet ist, die der Position der aktiven Karte vorausgeht, als Reaktion auf die Erkennung eines der aktiven Karte zugeordneten Zeitpunkts des Sendebeginns, der mit dem Zeitpunkt des Beginns der Anzeige der graphischen Schnittstelle identisch ist.

11. Vorrichtung zum Generieren einer graphischen Schnittstelle, umfassend ein Befehlsmodul, das konfiguriert ist
- für das Generieren einer graphischen Schnittstelle (6) mit einer Vielzahl von Programmkartenreihen, wobei jede Programmkartenreihe einem jeweiligen Sendekanal zugeordnet ist, wobei jede Programmkarte ein auf dem zugeordneten Sendekanal zu sendendes Programm darstellt, wobei jede Programmkarte einer Vielzahl von Programmattributen zugeordnet ist, die einen Zeitpunkt des Programmbeginns und einen Zeitpunkt des Programmendes enthalten, wobei die Programmkarten einer Reihe entlang einer ersten Achse (13) der graphischen Schnittstelle chronologisch angeordnet sind, wobei die Vielzahl von Reihen entlang einer zweiten Achse (14) der graphischen Schnittstelle angeordnet ist, wobei jede Programmkarte entlang der ersten Achse eine Dimension hat, die proportional zur einer der Programmkarte zugeordneten Programmdauer ist,
- für das Wählen eines anzeigbaren Bereichs der graphischen Schnittstelle, wobei der anzeigbare Bereich einen Teil der Programmkartenreihen der Vielzahl von Programmkartenreihen umfasst, und für jede Programmkartenreihe des Teils von Programmkartenreihen das Wählen der Programmkarten solcher Programmkartenreihen, die zum Senden zwischen einem Zeitpunkt (17) des Beginns der Anzeige und einem Zeitpunkt (18) des Endes der Anzeige bestimmt sind, wobei der anzeigbare Bereich der graphischen Schnittstelle ferner die aktive Karte einschließt, und das Anzeigen des anzeigbaren Bereichs auf einer Anzeigevorrichtung,
- für das Generieren eines aktiven Kartenzeigers (24), der in der graphischen Schnittstelle als Reaktion auf einen Navigationsbefehl bewegbar ist, wobei sich der Zeiger (24) zwischen Programmkarten sprungartig bewegt, wobei sich der Zeiger (24) als Reaktion auf einen Navigationsbefehl entlang der ersten Achse (13) entlang der ersten Achse (13) in einer Programmkartenreihe bewegt, wobei sich der Zeiger (24) als Reaktion auf einen Navigationsbefehl entlang der zweiten Achse (14) von einer Programmkartenreihe zur anderen bewegt, wobei die Programmkarte der graphischen Schnittstelle, an welcher der Zeiger (24) positioniert ist, die aktive Karte der graphischen Schnittstelle bildet;
- für das Wählen einer Programmkarte als aktive Karte,
- für das Bestimmen (26) eines gegenwärtigen Zeitpunkts,
- für das Zuordnen eines Sendestatus des der aktiven Karte zugeordneten Programms unter die Status «laufende Sendung» und «keine laufende Sendung», abhängig davon, ob der gegenwärtige Zeitpunkt zwischen dem der aktiven Karte zugeordneten Zeitpunkt des Programmbeginns und dem Zeitpunkt des Programmendes liegt oder nicht,
- für das Festlegen eines Zielparameters für den Sendezeitpunkt, der gleich dem gegenwärtigen Zeitpunkt ist, als Reaktion auf die Erkennung, dass der Sendestatus des der aktiven Karte zugeordneten Programms der Status «laufende Sendung» ist, und gleich dem der aktiven Karte zugeordneten Zeitpunkt des Programmbeginns als Reaktion auf die Erkennung, dass der Sendestatus des der aktiven Karte zugeordneten Programms «keine laufende Sendung» ist,
- für das Empfangen eines Navigationsbefehls, der eine Navigationsrichtung entlang der zweiten Achse (14) der graphischen Schnittstelle angibt,
- das Bewegen (36) des Zeigers (24), um als aktive Karte eine Programmkarte zu wählen, die in der Programmkartenreihe angeordnet ist, die der Navigationsrichtung entspricht und die zum Senden zum Ziel-Sendezeitpunkt bestimmt ist.

## Claims

1. Method for navigating in a graphical user interface (6) representing a program guide, the graphical user interface comprising:
- a plurality of series of program cards, each series of program cards being associated with a respective broadcast channel, each program card representing a program to be broadcast by said associated broadcast channel, each program card being associated with a plurality of program attributes including a program start time and a program end time, the program cards of a series of program cards being positioned in chronological order along a first axis of the graphical user interface (13), the plurality of series of program cards being positioned along a second axis of the graphical user interface (14), each program card having a dimension along the first axis of the graphical user interface proportional to a program duration assigned to said program card,
- an active card pointer (24) movable in the graphical user interface in response to navigation commands, the pointer (24) moving in jumps between program cards, the pointer (24) moving along the first axis (13) in a series of program cards in response to a navigation command along the first axis (13), the pointer (24) moving from one series of program cards to another in response to a navigation command along the second axis (14), the program card of the graphical user interface on which the pointer (24) is positioned constituting the active card of the graphical user interface,
wherein the method for navigating in the graphical user interface comprises:
- selecting (20) a displayable portion of the graphical user interface, said displayable portion comprising a portion of the series of program cards of the plurality of series of program cards and, for each series of program cards of the portion of series of program cards, the program cards of said series of program cards due to be broadcast between a display start time (17) and a display end time (18), the displayable portion of the graphical user interface further comprising the active card, and displaying the displayable portion on a display device,
- determining (26) a present time,
- determining a broadcast state of the program associated with the active card among the states "broadcast in progress" and "no broadcast in progress" depending on whether or not the present time is between the program start time and the program end time assigned to the active card,
- setting a target broadcast time parameter equal to the present time in response to detecting that the broadcast state of the program associated with the active card is "broadcast in progress", and equal to the program start time assigned to the active card in response to detecting that the broadcast state of the program associated with the active card is "no broadcast in progress",
- receiving (35) a navigation command presenting a direction of navigation along the second axis of the graphical user interface,
- moving (36) the pointer to select as the active card a program card positioned in the series of program cards corresponding to the direction of navigation and due to be broadcast at the target broadcast time.

2. Method for navigating in a graphical user interface according to claim 1, wherein the step of setting the target broadcast time parameter is performed in response to the reception of a navigation command along the first axis of the graphical user interface.

3. Method for navigating in a graphical user interface according to claim 2, wherein the step of setting the target broadcast time parameter is performed in response to the expiry of a time counter, the method further comprising
- resetting (37) the time counter to a positive duration determined on each reception of a navigation command along the first axis of the graphical user interface.

4. Method for navigating in a graphical user interface according to one of claims 1 to 3, wherein the step of displaying the displayable portion of the graphical user interface further comprises, for each program card of the displayable portion of the graphical user interface being broadcast at the present time, displaying a marking positioned on said program card being broadcast at the present time.

5. Method for navigating in a graphical user interface according to one of claims 1 to 4, wherein the plurality of series of program cards is positioned along the second axis of the graphical user interface in a cyclical way.

6. Method for navigating in a graphical user interface according to one of claims 1 to 5, further comprising:
- receiving a broadcast time-slot command, a predetermined display start time and a predetermined display end time being associated with the broadcast time-slot command,
- modifying the displayable portion of the graphical user interface to select, for each series of program cards of the displayable portion of the graphical user interface, the program cards of said series of program cards comprised between the predetermined display start time and the predetermined display end time,
- modifying the target broadcast time to define as the target broadcast time a predetermined broadcast time in said broadcast time-slot,
- positioning the pointer to select as the active card the program card due to be broadcast at the target broadcast time.

7. Method for navigating in a graphical user interface according to one of claims 1 to 5, further comprising:
- receiving a navigation command presenting a direction of navigation along the first axis of the graphical user interface, corresponding to a later time,
- comparing a broadcast end time assigned to the active card and the display end time of the displayable portion of the graphical user interface,
- modifying the displayable portion of the graphical user interface to select, for each series of program cards of the displayable portion of the graphical user interface, the program cards of said series of program cards comprised between the display end time of the displayable portion of the graphical user interface and the display end time of the displayable portion of the graphical user interface incremented by a predetermined duration, in response to the detection of a broadcast end time assigned to the active card later than or identical to the display end time of the graphical user interface.

8. Method for navigating in a graphical user interface according to claim 7, further comprising:
- positioning the pointer to select as the active card the program card positioned in the position following the position of the active card along the first axis of the graphical user interface in response to the detection of a broadcast end time assigned to the active card equal to the display end time.

9. Method for navigating in a graphical user interface according to one of claims 1 to 5, wherein the method for navigating further comprises:
- receiving a navigation command presenting a direction of navigation along the first axis of the graphical user interface corresponding to an earlier time,
- comparing the display start time of the displayable portion of the graphical user interface and the broadcast start time assigned to the active card,
- modifying the displayable portion of the graphical user interface to select, for each series of program cards of the displayable portion of the graphical user interface, the program cards of said series of program cards comprised between the display start time of the displayable portion of the graphical user interface and the display start time of the displayable portion of the graphical user interface incremented by a predetermined duration in response to the detection of a broadcast start time assigned to the active card earlier than or identical to the display start time of the graphical user interface.

10. Method for navigating in a graphical user interface according to claim 9, further comprising:
- positioning the pointer to select as the active card the program card positioned in the position preceding the position of the active card in response to the detection of a broadcast start time assigned to the active card identical to the display start time of the graphical user interface.

11. Device for generating a graphical user interface comprising a control module configured to:
- generate a graphical user interface (6) comprising a plurality of series of program cards, each series of program cards being associated with a respective broadcast channel, each program card representing a program to be broadcast by said associated broadcast channel, each program card being associated with a plurality of program attributes including a program start time and a program end time, the program cards of a series being positioned in chronological order along a first axis (13) of the graphical user interface, the plurality of series being positioned along a second axis (14) of the graphical user interface, each program card having a dimension along the first axis proportional to a program duration assigned to said program card,
- select a displayable portion of the graphical user interface, said displayable portion comprising a portion of the series of program cards of the plurality of series of program cards and, for each series of program cards of the portion of series of program cards, the program cards of said series of program cards due to be broadcast between a display start time (17) and a display end time (18), the displayable portion of the graphical user interface further comprising the active card, and display the portion displayable on a display device,
- generate an active card pointer (24) movable in the graphical user interface in response to navigation commands, the pointer (24) moving in jumps between program cards, the pointer (24) moving along the first axis (13) in a series of program cards in response to a navigation command along the first axis (13), the pointer (24) moving from one series of program cards to another in response to a navigation command along the second axis (14), the program card of the graphical user interface on which the pointer (24) is positioned constituting the active card of the graphical user interface,
- select a program card as the active card,
- determine (26) a present time,
- determine a broadcast state of the program associated with the active card among the states "broadcast in progress" and "no broadcast in progress" depending on whether or not the current time is between the program start time and the program end time assigned to the active card,
- set a target broadcast time parameter equal to the present time in response to detecting that the broadcast state of the active card is "broadcast in progress", and equal to the program start time assigned to the active card in response to detecting that the broadcast state of the active card is "no broadcast in progress",
- receive a navigation command presenting a direction of navigation along the second axis (14) of the graphical user interface,
- move the pointer (24) to select as the active card a program card positioned in the series of program cards corresponding to the direction of navigation and due to be broadcast at the target broadcast time.
